# EUROPEAN PATENT SPECIFICATION

(11) **EP 1 828 287 B1**
(45) Date of publication and mention of the grant of the patent: **17.01.2018**
(21) Application number: 05848859.4
(22) Date of filing: 02.12.2005
(51) Int. Cl.: B27N 3/00, B29K 105/06, C08J 3/24, B29C 47/00

(54) **WOOD FIBER PLASTIC COMPOSITES**
HOLZFASER-KUNSTSTOFF-VERBUNDWERKSTOFFE
COMPOSITES DE FIBRES LIGNEUSES ET DE PLASTIQUE

(30) Priority: 03.12.2004 US 632788 P
(43) Date of publication of application: 05.09.2007
(73) Proprietor: Dow Global Technologies LLC, Midland, MI 48674 (US)
(72) Inventor: MECCA, Jodi, M., Midland, Michigan 48642 (US); ESNEAULT, Calvin, P., Baton Rouge, Louisiana 70816-2903 (US); PHAM, Hoang, Lake Jackson, Texas 77566-6216 (US); MALOWINSKI, Nathan, A., Midland, Michigan 48642 (US); PENG, Hong, Lake Jackson, Texas 77566 (US); POPE, Timothy, J., Freeland, Michigan 48623 (US); DIEHL, Charles, F., Lake Jackson, Texas 77566 (US)
(74) Representative: Boult Wade Tennant
(86) International application number: PCT/US2005/043735
(87) International publication number: WO 2006/060714

(56) References cited:
- EP-A- 1 508 579
- EP-A2- 0 365 289
- WO-A-92/07009
- WO-A-99/10395
- CA-A1- 1 269 187
- US-A- 5 604 033
- DATABASE WPI Section Ch, Week 198808 Derwent Publications Ltd., London, GB; Class A85, AN 1988-053660 XP002373269 -& JP 63 010414 A (FURUKAWA ELECTRIC CO LTD) 18 January 1988 (1988-01-18)

## Description

### BACKGROUND OF INVENTION

Wood fiber-plastic composites, sometimes referred to as WPCs, are blends of wood fiber and at least one thermoplastic. Originally, WPCs were developed as an outlet to use recycled plastic and scrap wood or sawdust. Many wood fiber-plastic composite producers still use recycled materials, but many also use off-grade and virgin thermoplastics in place of or in addition to recycled material. One use for WPCs is an exterior decking material. Depending on the formulation, unwanted water absorption can occur in some composites. Other composites may have reduced water absorption, but remain susceptible to degradation due to exposure to other environmental stresses. Another issue to consider is the ease with which the wood fiber plastic composite can be formed into articles such as decking planks.
CA-A-1,269,187 relates to polymer resin composites prepared by incorporating cellulosic fibers into a polymeric resin or resin blends.
EP-A-365,289 describes a method for producing a filled water-crosslinkable silane copolymer composition characterised in that the composition comprises: (A) a silane copolymer having a silane content of from 2 to 50 percent by weight, (B) a second polymer prepared from at least one olefin monomer selected from the group consisting of ethylene, propylene, butene, isobutylene, octene, 4-methyl-pentene-1 and hexene, (C) at least one filler in an amount from 5 to 75 percent by weight of the total weight of the composition and (D) an organometallic silanol condensation catalyst, and in that the second polymer, filler and silanol condensation catalyst are blended together to form a masterbatch premix in which the silanol condensation catalyst is substantially homogeneausly dispersed and subsequently blending the masterbatch premix with the silane copolymer to form a water-crosslinkable silane copolymer composition in which the silane content is from 0.5 to 25 percent by weight.

Attempts to improve resistance to problems such as environmental stress cracking often results in a loss of performance in another property, such as impact strength. For instance the use of polymers exhibiting high stiffness and heat resistance tend to lack toughness and have lower environmental stress cracking resistance (ESCR). Similarly for improved polymer processability, it is desirable to use polymers having a relatively low molecular weight, and a broad molecular weight distribution with significant levels of long chain branching. But while such polymers have better processability, they usually lack the strength and toughness that is desired for use in wood composites. Thus, composites that have a balance of properties and processability would be useful.

### BRIEF SUMMARY OF EMBODIMENTS OF THE INVENTION

A composition, comprising a mixture of a) a cellulosic material; b) a silane-containing polymer; and c) a thermoplastic, wherein the thermoplastic is either selected from the group consisting of one or more polystyrenes, polyvinylchlorides, polyesters, and combinations thereof or comprises a thermoplastic polyolefin, wherein the thermoplastic polyolefin comprises an interpolymer of ethylene with at least one comonomer selected from the group consisting of a C₄-C₂₀ linear, branched or cyclic diene, vinyl acetate, and a compound represented by the formula H₂C=CHR wherein R is a C₁-C₂₀ linear, branched or cyclic alkyl group or a C₆-C₂₀ aryl group, a copolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group, a homopolymer of ethylene or a homopolymer of propylene wherein the silane-containing polymer is prepared by copolymerizing an ethylenically unsaturated silane and an alpha-olefin wherein the ethylenically unsaturated silane compound corresponds to the formula:

RSiR'ₙY₃₋ₙ

wherein R is an ethylenically unsaturated hydrocarbyl or hydrocarbyloxy group; each R' independently is an aliphatic saturated hydrocarbyl group, each Y independently is a hydrolyzable organic group, and n ranges from 0 to 2.
In some embodiments, the composition comprises from 0.5 to 60 percent by weight silane-containing polymer, wherein the percent by weight is based on the weight of components (a) (b) and (c). In particular embodiments, the silane-containing polymer includes 0.1 to 10 wt. % groups derived from an ethylenically unsaturated silane.

Typically, the compositions described herein comprise from greater than 0 to 60 percent by weight thermoplastic, wherein the percent by weight is based on the weight of components (a), (b), and (c). The thermoplastic used in the compositions described herein is selected from the group consisting of one or more polystyrenes, polyvinylchlorides, polyesters, and combinations thereof or
the thermoplastic comprises a thermoplastic polyolefin. Suitable thermoplastic olefins comprise an interpolymer of ethylene with at least one comonomer selected from the group consisting of a C₄-C₂₀ linear, branched or cyclic diene, vinyl acetate, and a compound represented by the formula H₂C=CHR wherein R is a C₁-C₂₀ linear, branched or cyclic alkyl group or a C₆-C₂₀ aryl group. In other embodiments, the thermoplastic resin comprises a copolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group.

The compositions described above may optionally include a crosslinking catalyst. In particular embodiments, the catalyst comprises an organotitanate or an organozirconate. In other embodiments, the catalyst is selected from the group consisting of dibutyltin dioctoate, dibutyltin diacetate, dibutyltin dilaurate, tin naphthonate, tin octoate, lead octoate, iron octoate, zinc octoate, tetrabutyl orthotitanate, tetraisopropyl orthotitanate, ethylacetoacetate aluminum diisopropylate, and aluminum tris (ethylacetate). Some suitable catalysts are described in published U.S. Pat. Appl's. 20022003215, and 20020035213, as well as U.S. Pat. Nos. 6441097, 6395837, and 6005055.

Some compositions described herein are crosslinkable or at least partially crosslinked. Other compositions are completely crosslinked. Compositions that have crosslinking may be preferred when improved creep properties are desired.

Some compositions described herein absorb at least 50 wt. % less water than a comparative composition that is substantially free of the silane containing copolymer after 1080 hours of immersion at room temperature. In particular embodiments, the compositions absorb less than 5 wt. % water after 1080 hours of immersion at room temperature. In still other embodiments, the compositions described herein have a flexural modulus of at least 2500 MPa and absorb at least 50 wt. % less water and than a comparative composition that is substantially free of the silane containing copolymer after 1080 hours of immersion at room temperature. By "comparative", it is meant that the silane is omitted from the formulation and replaced by the thermoplastic such that the percent wood (cellulosic) remains constant.

The composition may be in the form of a composite prepared by a method comprising
combining a cellulosic material, a silane-containing polymer, and a thermoplastic. In some embodiments, the method provides a substantially homogeneous product. Typically, the components of the composition are combined by melt extrusion or in a batch process.

### BRIEF DESCRIPTION OF THE DRAWINGS

Figure 1 compares the modulus of rupture for several compositions described herein.
Figure 2 compares the modulus of elasticity for several compositions described herein.

### DETAILED DESCRIPTION OF EMBODIMENTS OF THE INVENTION

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, RL and an upper limit, RU, is disclosed, any number falling within the range is specifically disclosed. In particular, the following numbers within the range are specifically disclosed: R=RL+k*(RU-RL), wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

In some embodiments, the cellulosic material is a wood fiber. Typical wood fibers useful in some embodiments are derived from oak, spruce, pine, maple, cedar, or mixtures thereof. In other embodiments, natural fiber cellulosic materials such as flax, cotton, sisal, or mixtures thereof are suitable. Whatever cellulosic material is selected, typical composites comprise from 40 to 98 percent by weight cellulosic material. Some preferred compositions have 45 to 90 percent by weight cellulosic material. In other embodiments, the composite comprises from 50 to 70 percent by weight cellulosic material The amounts of cellulosic material should be determined based on the weight of the cellulosic material, the silane-containing polymer, and the thermoplastic.

In addition to the cellulosic material, some embodiments of the compositions described herein comprise from 0.5 to 60 percent by weight of the silane-containing polymer. In some embodiments, the silane-containing polymer is present at from 1 to 55 percent by weight in the composition. Some particular embodiments comprise less than 50% by weight of the cellulosic material. For some applications, a silane-containing polymer content of 1 to 10 percent by weight is particularly useful. In still other embodiments, the composite comprises from 20 to 40 to 50 percent by weight silane-containing polymer. In particular embodiments, 15 to 30 percent by weight of the thermoplastic is desirable.

The amounts of the silane-containing copolymer should be determined based on the weight of the cellulosic material, the silane-containing polymer, and the thermoplastic.

Some preferred silane-containing polymers include from 0.1 to 10 wt. % groups derived from an ethylenically unsaturated silane. Other silane-containing polymers have 0.5 to 3.0 wt. % silane groups derived from an ethylenically unsaturated silane. In other words in some embodiments, the silane-containing polymer has from greater than 0 to 4 wt. % silicon, based on the weight of the silane-containing polymer. Yet, in other embodiments, the silane-containing polymer has from 1 to 3 wt. % silicon, based on the weight of the silane-containing polymer. In still other embodiments, the silane-containing polymer has from 1.5 to 2 wt. % silicon, based on the weight of the silane-containing polymer. In some embodiments, the composition has from greater than 0 to 2 wt. % silicon, based on the weight of components a), b), and c). In other embodiments, the composition has from greater than 0 to 2 wt. % silicon, based on the total weight of the composition. In still other embodiments the composition includes from greater than 0 to 2 wt. % silicon, based on the total weight of the composition and the silane-containing polymer comprises 1 to 3 wt. % silicon. The silane-containing polymer is made by copolymerizing an ethylenically unsaturated silane and an alpha-olefin. Some suitable silane compounds follow the formula:

RSiR'ₙY₃₋ₙ

wherein R is an ethylenically unsaturated hydrocarbyl or hydrocarbyloxy group; each R' independently is an aliphatic saturated hydrocarbyl group; each Y independently is a hydrolyzable organic group; and n ranges from 0 to 2. In some silane compounds R is vinyl, allyl, isopropenyl, butenyl, cyclohexenyl, or γ-methacryloxypropyl; Y is methoxy, ethoxy, formyloxy, acetoxy, propionoxy, alkyl, or arylamino; and R' is methyl, ethyl, propyl, decyl, or phenyl. In some embodiments, vinyltrimethoxysilane, vinyltriethoxsilane, or a mixture thereof is used.

In one preferred embodiment the thermoplastic comprises a thermoplastic polyolefin or polyolefin blend. Some suitable thermoplastic polyolefins include polyethylene or polypropylene homopolymers or copolymers. In some embodiments, the thermoplastic comprises an interpolymer of ethylene with at least one comonomer selected from the group consisting of a C₄-C₂₀ linear, branched or cyclic diene, vinyl acetate, and a compound represented by the formula H₂C=CHR wherein R is a C₁-C₂₀ linear, branched or cyclic alkyl group or a C₆-C₂₀ aryl group. In other embodiments, thermoplastic comprises a copolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group. Typical comonomers include ethylene, 1-propene, isobutylene, 1-butene, 1-hexene, 4-methyl-1-pentene, or 1-octene.

In particular embodiments, polyolefins such as polypropylene, polyethylene, and copolymers thereof and blends thereof, as well as ethylene-propylene-diene terpolymers are used. In some embodiments, preferred olefinic polymers include high density polyethylene (HDPE) as described in U.S. Pat. No. 4076698 to Anderson; heterogeneously branched linear low density polyethylene (LLDPE); heterogeneously branched ultra low linear density (ULDPE); homogeneously branched, linear ethylene/alpha-olefm copolymers; homogeneously branched, substantially linear ethylene/alpha-olefin polymers which can be prepared, for example, by a process disclosed in U.S. Pat. Nos. 5272236 and 5278272; and high pressure, free radical polymerized ethylene polymers and copolymers such as low density polyethylene (LDPE). Polymer compositions described in U.S. Pat. Nos. 6538070, 6566446, 5869575, 6448341, 5677383, 6,316,549, 6111023, or 5844045, are also suitable in some embodiments. Of course, blends of polymers can be used as well. In some embodiments the blends include two different Ziegler-Natta polymers. In other embodiments, the blends can include blends of a Ziegler-Natta and a metallocene polymer. In still other embodiments, the thermoplastic resin used herein is a blend of two different metallocene polymers.

Some thermoplastics useful herein include an aliphatic α-olefin having from 2 to 20 carbon atoms and containing polar groups. Suitable aliphatic α-olefin monomers which introduce polar groups into the polymer include, for example, ethylenically unsaturated nitriles such as acrylonitrile, methacrylonitrile, ethacrylonitrile, etc.; ethylenically unsaturated anhydrides such as maleic anhydride; ethylenically unsaturated amides such as acrylamide, methacrylamide etc.; ethylenically unsaturated carboxylic acids (both mono- and difunctional) such as acrylic acid and methacrylic acid Some such polymers are available under the trade names Primacor™, Nucrel™, and Escor™ and are described in U.S. Pat. Nos. 4599392, 4988781, and 5384373.

Other monomers include esters (especially lower, e.g. C₁-C₆, alkyl esters) of ethylenically unsaturated carboxylic acids such as methyl methacrylate, ethyl acrylate, hydroxyethylacrylate, n-butyl acrylate or methacrylate, 2-ethyl-hexylacrylate, or ethylene-vinyl acetate copolymers; ethylenically unsaturated dicarboxylic acid imides such as N-alkyl or N-aryl maleimides such as N-phenyl maleimide, etc. Preferably such monomers containing polar groups are acrylic acid, vinyl acetate, maleic anhydride and acrylonitrile. Halogen groups which can be included in the polymers from aliphatic α-olefin monomers include fluorine, chlorine and bromine; preferably such polymers are chlorinated polyethylenes (CPEs).

Heterogeneous interpolymers are differentiated from the homogeneous interpolymers in that in the latter, substantially all of the interpolymer molecules have the same ethylene/comonomer ratio within that interpolymer, whereas heterogeneous interpolymers are those in which the interpolymer molecules do not have the same ethylene/comonomer ratio. The term "broad composition distribution" used herein describes the comonomer distribution for heterogeneous interpolymers and means that the heterogeneous interpolymers have a "linear" fraction and that the heterogeneous interpolymers have multiple melting peaks (i.e., exhibit at least two distinct melting peaks) by DSC. The heterogeneous interpolymers have a degree of branching less than or equal to 2 methyls/1000 carbons in 10 percent (by weight) or more, preferably more than 15 percent (by weight), and especially more than 20 percent (by weight). The heterogeneous interpolymers also have a degree of branching equal to or greater than 25 methyls/1000 carbons in 25 percent or less (by weight), preferably less than 15 percent (by weight), and especially less than 10 percent (by weight).

The Ziegler catalysts suitable for the preparation of the heterogeneous component of the current invention are typical supported, Ziegler-type catalysts. Examples of such compositions are those derived from organomagnesium compounds, alkyl halides or aluminum halides or hydrogen chloride, and a transition metal compound. Examples of such catalysts are described in U.S. Pat. Nos. 4314912 (Lowery, Jr. et al.), 4547475 (Glass et al.), and 4612300 (Coleman, III).

Suitable catalyst materials may also be derived from inert oxide supports and transition metal compounds. Examples of such compositions are described in U.S. Pat. No. 5420090 (Spencer. et al.).

The heterogeneous polymer component can be an α-olefin homopolymer preferably polyethylene or polypropylene, or, preferably, an interpolymer of ethylene with at least one C₃-C₂₀ α-olefin and/or C₄-C₁₈ dienes. Heterogeneous copolymers of ethylene, and propylene, 1-butene, 1-hexene, 4-methyl-1-pentene and 1-octene are especially preferred.

The relatively recent introduction of metallocene-based catalysts for ethylene/α-olefin polymerization has resulted in the production of new ethylene interpolymers known as homogeneous interpolymers.

The homogeneous interpolymers useful for forming the compositions described herein have homogeneous branching distributions. That is, the polymers are those in which the comonomer is randomly distributed within a given interpolymer molecule and wherein substantially all of the interpolymer molecules have the same ethylene/comonomer ratio within that interpolymer. In some embodiments, preferred homogeneous polymers are described in U.S. Pat. No. 3645992 by Elston. The homogeneity of the polymers is typically described by the SCBDI (Short Chain Branch Distribution Index) or CDBI (Composition Distribution Branch Index) and is defined as the weight percent of the polymers molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, in Wild et al, Journal of Polymer Science, Poly. Phys. Ed., Vol. 20, p. 441 (1982), in U.S. Pat. No. 4798081 (Hazlitt et al.), or as is described in U.S. Pat. No. 5008204 (Stehling).

The technique for calculating CDBI is described in U.S. Pat. No. 5322728 (Davey et al.) and in U.S. Pat. No. 5246783 (Spenadel et al.). or in U.S. Pat. No. 5089321 (Chum et al.).

The SCBDI or CDBI for the homogeneous interpolymers used in the present invention is preferably greater than 30 percent, especially greater than 50 percent, preferably greater than 75, 80, 85, or 90 percent.

Some homogeneous interpolymers used in this invention essentially lack a measurable "high density" fraction as measured by the TREF technique (i.e., the homogeneous ethylene/α-olefin interpolymers do not contain a polymer fraction with a degree of branching less than or equal to 2 methyls/1000 carbons). The homogeneous interpolymers also do not contain any highly short chain branched fraction (i.e., they do not contain a polymer fraction with a degree of branching equal to or more than 30 methyls/1000 carbons).

The homogeneous polymer component can be an α-olefin homopolymer preferably polyethylene or polypropylene, or, preferably, an interpolymer of ethylene with at least one C₃-C₂₀ α-olefin and/or C₄-C₁₈ dienes. Homogeneous copolymers of ethylene, and propylene, 1-butene, 1-hexene, 4-methyl-1-pentene and 1-octene are especially preferred.

Propylene homo- or copolymers, or blends of an elastomeric material such as ethylene/propylene rubber (EPM) or ethylene/propylene diene monomer terpolymer (EPDM) or substantially linear ethylene alpha olefin with density less than 0.91 g/cm³ (ethylene octene, ethylene hexene, ethylene butene,...) and a more rigid material such as isotactic polypropylene can also be used. Other materials or components can be added into the formulation depending upon the application, including oil, components, and cross-linking agents. Generally, such compositions are characterized by a balance of stiffness (modulus) and low temperature impact, good chemical resistance and broad use temperatures. Because of these features, some compositions can be used in embodiments designed for applications such as automotive facia and instrument panels.

The polypropylene is generally in the isotactic form of homopolymer polypropylene, although other forms of polypropylene can also be used (e.g., syndiotactic or atactic). Polypropylene impact copolymers (e.g., those wherein a secondary copolymerization step reacting ethylene with the propylene is employed) and random copolymers (also reactor modified and usually containing 0.3-10%, preferably 1.5-7%, ethylene copolymerized with the propylene), however, can also be used. In-reactor blends of polypropylenes can also be used. A complete discussion of various polypropylene polymers is contained in Modem Plastics Encyclopedia/89, mid October 1988 Issue, Volume 65, Number 11, pp. 86-92 .

The molecular weight of the polypropylene for use in the present invention is conveniently indicated using a melt flow measurement according to ASTM D-1238, Condition 230°C/2.16 kg (formerly known as "Condition (L)" and also known as I2). Melt flow rate is inversely proportional to the molecular weight of the polymer. Thus, the higher the molecular weight, the lower the melt flow rate, although the relationship is not linear. The melt flow rate for the polypropylene useful herein is generally from 0.1 grams/10 minutes (g/10 min) to 80 g/10 min, preferably from 0.5 g/10 min to 35 g/10 min, and especially from 1 g/10 min to 20 g/10 min.

In addition to polyolefins, polystyrenes, polyvinylchlorides, polyesters, and combinations thereof are useful.

Some suitable polystyrenes are block copolymers having unsaturated rubber monomer units including, but not limited to, styrene-butadiene (SB), styrene-isoprene(SI), styrene-butadiene-styrene (SBS), styrene-isoprene-styrene (SIS), α-methylstyrene-butadiene-α-methylstyrene and α-methylstyrene-isoprene-α-methylstyrene.

The styrenic portion of the block copolymer is preferably a polymer or interpolymer of styrene and its analogs and homologs including α-methylstyrene and ring-substituted styrenes, particularly ring-methylated styrenes. The preferred styrenics are styrene and α-methylstyrene, and styrene is particularly preferred.

Block copolymers with unsaturated rubber monomer units may comprise homopolymers of butadiene or isoprene or they may comprise copolymers of one or both of these two dienes with a minor amount of styrenic monomer.

Preferred block copolymers with saturated rubber monomer units comprise at least one segment of a styrenic unit and at least one segment of an ethylene-butene or ethylene-propylene copolymer. Preferred examples of such block copolymers with saturated rubber monomer units include styrene/ethylene-butene copolymers, styrene/ethylene-propylene copolymers, styrene/ethylene-butene/styrene (SEBS) copolymers, styrene/ethylene-propylene/styrene (SEPS) copolymers.

In addition to styrenic block copolymers, various styrene homopolymers and copolymers and rubber modified styrenics can be used. These include polystyrene, high impact polystyrene and copolymers such as acrylonitrile-butadiene-styrene (ABS) polymers, styrene-acrylonitrile (SAN).

In other embodiments, the thermoplastic is a vinyl halide homopolymer or copolymer. Vinyl halide homopolymers and copolymers are a group of resins which use as a building block the vinyl structure CH₂=CXY, where X is selected from the group consisting of F, Cl, Br, and I and Y is selected from the group consisting of F, Cl, Br, I and H.

The vinyl halide polymer component of the blends of the present invention include but are not limited to homopolymers and copolymers of vinyl halides with copolymerizable monomers such as α-olefins including, but not limited to, ethylene, propylene, vinyl esters of organic acids containing 1 to 18 carbon atoms, e.g. vinyl acetate, vinyl stearate and so forth; vinyl chloride, vinylidene chloride, symmetrical dichloroethylene; acrylonitrile, methacrylonitrile; alkyl acrylate esters in which the alkyl group contains 1 to 8 carbon atoms, e.g. methyl acrylate and butyl acrylate; the corresponding alkyl methacrylate esters; dialkyl esters of dibasic organic acids in which the alkyl groups contain 1 - 8 carbon atoms, e.g. dibutyl fumarate, diethyl maleate, and so forth.

Preferably the vinyl halide polymers are homopolymers or copolymers of vinyl chloride or vinylidene chloride. Poly (vinyl chloride) polymers (PVC) can be further classified into two main types by their degree of rigidity. These are "rigid" PVC and "flexible" PVC. Flexible PVC is distinguished from rigid PVC primarily by the presence of and amount of plasticizers in the resin. Flexible PVC typically has improved processability, lower tensile strength and higher elongation than rigid PVC.

Of the vinylidene chloride homopolymers and copolymers (PVDC), typically the copolymers with vinyl chloride, acrylates or nitriles are used commercially and are most preferred. The choice of the comonomer significantly affects the properties of the resulting polymer. Perhaps the most notable properties of the various PVDC's are their low permeability to gases and liquids, barrier properties; and chemical resistance.

Also included in the family of vinyl halide polymers for use as blend components of the present invention are the chlorinated derivatives of PVC typically prepared by post chlorination of the base resin and known as chlorinated PVC, (CPVC). Although CPVC is based on PVC and shares some of its characteristic properties, CPVC is a unique polymer having a much higher melt temperature range (410 - 450°C) and a higher glass transition temperature (115 - 135°C (239 - 275°F)) than PVC.

Generally, the thermoplastic comprises from greater than 0 to 60 percent by weight of the thermoplastic.

The compositions described above may also include a crosslinking catalyst. Typically, the cross-linking catalyst is present at a concentration of from greater than 0 to 1 percent by weight. Some embodiments include from 0.03 to 0.25 percent by weight cross-linking catalyst in the composite. Some preferred catalysts include an organotitanate or an organozirconate. Suitable crosslinking catalysts include dibutyltin dioctoate, dibutyltin diacetate, dibutyltin dilaurate, tin naphthonate, tin octoate, lead octoate, iron octoate, zinc octoate, tetrabutyl orthotitanate, tetraisopropyl orthotitanate, ethylacetoacetate aluminum diisopropylate, and aluminum tris (ethylacetate).

Typically, the wood fiber composites described herein may contain additives for a variety of purposes. Additives such as antioxidants (e.g., hindered phenols such as, for example, Irganox® 1010, and phosphites, e.g., Irgafos® 168, (both are registered trademarks of, and supplied by Ciba-Geigy Corporation, NY), u.v. stabilizers (including Tinuvin™ 328 and Chimassorb 944, both are registered trademarks of, and supplied by Ciba-Geigy Corporation, NY), slip agents (such as erucamide and/or stearamide), antiblock additives, colorants, pigments, coupling agents (such as Polybond 3029MP available from Crompton Corp. and Fusabond MB-226D or MD-353D available from Equistar Chemical, as well as Doverbond DB 4300 from The Dow Chemical Company), fire retardant additives, biocides (such as thiazolyl benzimidazoles like Irgaguard F3000 available from Ciba-Geigy Corporation, NY), chemical foaming agents, and the like can also be included in the interpolymers and/or blends employed. Processing aids, or lubricants, include ethylene bis-stearamide (EBS), zinc stearate, aluminum stearate, paraffin waxes, and oxidized polyethylene, fluoroelastomers (such as Cesa-process 8477 available from Clariant) phthalates, such as dioctyl phthalate and diisobutyl phthalate, natural oils such as lanolin, and paraffin, naphthenic and aromatic oils obtained from petroleum refining, and liquid resins from rosin or petroleum feedstocks. Suitable modifiers which can be employed herein as the plasticizer include at least one plasticizer selected from the group consisting of phthalate esters, trimellitate esters, benzoates, adipate esters, epoxy compounds, phosphate esters (triaryl, trialkyl, mixed alkyl aryl phosphates), glutarates and oils. Particularly suitable phthalate esters include, for example, dialkyl C₄-C₁₈ phthalate esters such as diethyl, dibutyl phthalate, diisobutyl phthalate, butyl 2-ethylhexyl phthalate, dioctyl phthalate, diisooctyl phthalate, dinonyl phthalate, diisononyl phthalate, didecyl phthalate, diisodecyl phthalate, diundecyl phthalate, mixed aliphatic esters such as heptyl nonyl phthalate, di(n-hexyl, n-octyl, n-decyl) phthalate (P610), di(n-octyl, n-decyl) phthalate (P810), and aromatic phthalate esters such as diphenyl phthalate ester, or mixed aliphatic-aromatic esters such as benzyl butyl phthalate or any combination thereof and the like.

In some embodiments, lubricants comprising or consisting essentially of one or more metallic stearates are preferred. Particular metallic stearates include aluminum stearate and zinc stearate. Zinc stearate is particularly useful in some embodiments. Some preferred embodiments include one or more metallic stearates, but do not include other lubricants. The lubricant may be provided in any useful amount. Typically, the lubricant comprises 0.01 to 10 percent by weight of the total composition. In some embodiments, the lubricant comprises 0.01 to 5 percent by weight of the composition. In other embodiments, the lubricant comprises from 1 to 3 percent by weight of the composition.

Exemplary classes of oils useful as processing aids include white mineral oil (such as Kaydol™ oil (available from Witco), and Shellflex™ 371 naphthenic oil (available from Shell Oil Company). Another suitable oil is Tuflo™ oil (available from Lyondell).

### EXAMPLES

In Examples 1-3 and the comparative examples, wood fiber composites having relatively low levels of organic component are prepared to examine the physical properties of the composites. Three different organic components were used. Component 1 is a maleic anhydride grafted polyethylene polymer available from Honeywell having 6.22 wt. percent functional groups (as determined from the saponification number of 30-40 mg KOH/g polymer as reported by the manufacturer), a density of 0.92 g/cc, and a viscosity of greater than 1 Pa.s (1000 cps) (max) at 140°C measured on a Brookfield viscometer. Component 2 is also a maleic anhydride grafted polyethylene polymer but has 0.89 wt. percent functional groups (as determined from the saponification number of 8-9 mg KOH/g polymer, as reported by the manufacturer), and a Brookfield viscosity of 0.6 Pa.s (600 cps) (max) at 140°C. Component 3 is an ethylene vinyl trimethoxy silane copolymer available from the Dow Chemical Co. having 1.5 wt. percent silane groups, a density of about 0.922 g/cc and a melt index of 1.5 g/10 min as determined by ASTM D-1238, Condition 230°C/2.16 kg.

In preparing the composites, the selected components were placed in plastic containers and shaken to distribute the plastic pellets and wood fiber. The mixtures are then melt blended at 170-180 °C and 30 RPM for approximately 20 minutes using a Haake Rheocord 90. Care should be taken to ensure that the temperature of the mixture remained below 180 °C to limit burning of the wood fibers.

Following blending, the composite blends are removed from the Haake mixer and compression molded into plaques. A hydraulic compression press manufactured by Pasadena Hydraulics, Inc. is used to compress the samples. The samples are compressed according to the following process. In the first compression step, 74 g of polymer are placed in the chase and molded in a three mode process, 170 °C/ 4 min/454 kg (1000 lbs); 170 °C/ 1 min/ 15876 kg (35000 lbs); cool/ 3.5 min/ 15876 kg (35000 lbs). In the second compression step, half of a plaque is placed on top of a full plaque and is molded in the following process 170 °C/ 5 min/ 454 kg (1000 lbs); 170 °C/ 2 min/ 18144 kg (40000 lbs); 170°C/ 2 min/ 454 kg (1000 lbs); 170 °C/ 3 min/ 18144 kg (40000 lbs); cool/ 5 min/ 18144 kg (40000 lbs).

Type I tensile bars and flexural bars are cut from the molded plaques using a Mutronic CNC (Computer Numerically Controlled) milling machine with a 6 mm carbide milling bit.

The flexural modulus is measured using an Instron 55R4507 according to ASTM D 790-97 (Procedure A) "Flexural Properties of Unreinforced and Reinforced Plastics and Electrical Insulating Materials". The specimens used have a width of 1.27 cm (0.5 inches) and a length of 15 cm (6.0 inches). The target thickness is 0.3175 cm (0.125 inches), but the exact thickness for each bar is measured before testing. The support span is set at 5.1 cm (2 inches). The rate of testing is determined according to ASTM 790-97 with a support span of 5.1 cm (2 inches) was 0.127 cm (0.05 inches) per minute. The loading nose and supports have a radius of 0.3175 cm (0.125 inches). The testing is done in a constant temperature and humidity room set at 23°C and 50% humidity.

Tensile properties are measured on Type I tensile bars based on ASTM D 638-00 "Standard Test Methods for Tensile Properties of Plastics." Measurements are made on an Instron 55R4507 using a HRDE extensometer and 10000 N (2248 lbf) load cell. The rate of extension is 0.2 % per minute. The testing is done in a constant temperature and humidity room set at 23°C and 50% humidity.

The moisture resistance of the WPCs is measured using rectangular bars with the same dimensions as used for flexural property testing. The mass of each bar is measured and recorded prior to immersion in water. The bars are placed upright in jars and the jars filled with water. The mass is measured for each bar at successive intervals of time. For a portion of the samples the thickness of the samples is also monitored at three positions on the bar as a function of time.

The data in Table 1 indicate that the presence of the silane-containing polymer advantageously improves the physical properties of some compositions of the present invention. At constant wood fiber content, samples lacking the silane generally have a flexural modulus that is less than compositions wherein a portion of the thermoplastic polymer has been replaced with the silane-containing polymer. For Example Comparative Example 1 has 60 wt. % wood fiber and 40 wt. % of the thermoplastic polymer. The flexural modulus of this comparative example has an average value of 2545 MPa. Inventive Example 1 also has 60 wt. % wood fiber, but has 36 wt. % thermoplastic and 4 wt. % of the silane-containing polymer. The flexural modulus of inventive example 1 is 2870 MPa. Likewise, tensile properties and water absorption characteristics of inventive example 1 are

**Table 1**

| | **Component** | **wt. percent wood fiber** | **wt. percent polymer** | **wt. percent component** | **Flexural Modulus, MPa** | **Tensile Stress at Break MPa** | **Tensile Strain at Break (%)** | **Wt. percent water absorbed after 24 hr. immersion** |
|---|---|---|---|---|---|---|---|---|
| Example 1 | 3 | 60 | 36 | 4 | 2870 | 26.8 | 1.20 | 1.5 |
| Example 2 | 3 | 70 | 25.3 | 4.7 | 3240 | 21.0 | 0.81 | 2.7 |
| Example 3 | 3 | 75 | 20 | 5 | 4130 | 21.0 | 0.73 | 3.7 |
| Comparative Example 1 | --- | 60 | 40 | 0 | 2410 | 9.24 | 0.50 | 4.7 |
| | | | | | 2680 | 14.1 | 0.56 | |
| Comparative Example 2 | --- | 70 | 30 | 0 | 2250, 2030 | 7.86 | 0.62 | 11.9 |
| Comparative Example 3 | --- | 75 | 25 | 0 | 2500, 2700 | 6.51, 5.91 | 0.37, 0.26 | 20.4, 14.5 |
| Comparative Example 4 | 2 | 60 | 36 | 4 | 2660 | 13.6 | 0.50 | 2.4 |
| Comparative Example 5 | 2 | 70 | 25.3 | 4.7 | --- | --- | --- | --- |
| Comparative Example 6 | 2 | 75 | 20 | 5 | --- | --- | --- | --- |
| Comparative Example 7 | 1 | 60 | 36 | 4 | 2780 | 14.1 | 0.48 | --- |
| Comparative Example 8 | 1 | 70 | 25.3 | 4.7 | 3340 | 11.5 | 0.39 | 5.4 |
| Comparative Example 9 | 1 | 75 | 20 | 5 | --- | --- | --- | --- |

also improved in comparison to comparative example 1. For instance the amount of water absorbed by inventive example 1 less than one third of that absorbed by comparative example 1. These physical properties are also improved in comparison to compositions a component other than the silane-containing copolymer. For example, Comparative Example 4 is a composition with 60 wt % wood fiber, 36 wt % thermoplastic, and 4 wt. % maleic anhydride grafted polyethylene polymer. This sample absorbs about 60% more water than inventive example 1 and has a flexural modulus of 2660 MPa.

In another series of examples composites having higher component concentrations and optionally including a crosslinking catalyst are prepared as indicated in Table 2. The

**Table 2**

| **Example** | **% WF** | **% HDPE** | **% EVTMS** | **% Catalyst Masterbatch*** |
|---|---|---|---|---|
| Comp. Ex. 10 | 50 | 0 | 47.5 | 2.5 |
| Comp. Ex. 11 | 50 | 0 | 48 | 2 |
| Comp. Ex. 12 | 50 | 0 | 48.5 | 1.5 |
| Comp. Ex. 13 | 50 | 0 | 50 | 0 |
| 4 | 50 | 16 | 32 | 2 |
| 5 | 50 | 24 | 24 | 2 |
| 6 | 50 | 32 | 16 | 2 |
| 7 | 50 | 44 | 4 | 2 |
| Comparative 14 | 50 | 48 | 0 | 2 |
| 8 | 60 | 22 | 16 | 2 |
| 9 | 70 | 12 | 16 | 2 |
| 10 | 50 | 23.75 | 23.75 | 2.5 |
| Comparative 15 | 50 | 50 | 0 | 0 |

| | | | | |
|---|---|---|---|---|
| *percentage of catalyst/polymer mixture added. | | | | |

wood fiber again is supplied as a 40 mesh maple wood fiber (4010) provided by American Wood Fibers. The component is an ethylene vinyl trimethoxysilane (EVTMS) copolymer with a melt index of 1.5 g/10 min, a density of 0.922 g/cc, and 1.5 % vinyl trimethoxysilane by weight. The thermoplastic olefin is a high density polyethylene (HDPE) with a melt index of 0.7 g/10 min and a density of 0.961 g/cc. In those examples having a catalyst, a master batch containing between 1-5 % dibutyltindilaurate catalyst in a low density polyethylene matrix (MI = 3.05 g/10 min, density = 0.927 g/cc) was used.

In preparing the composites, the selected components are placed in plastic containers and shaken to distribute the plastic pellets and wood fiber. The mixtures are then melt blended at 170-180 °C and 30 RPM for approximately 10 minutes using a Haake Rheocord 90. The catalyst masterbatch was added with 2 minutes remaining in order to improve the mixing of the polymer and wood. Again, care should be taken to ensure that the temperature of the mixture remained below 180 °C to limit the premature crosslinking and burning of the wood fibers.

Immediately following blending, the composite blends are removed from the Haake mixer and compression molded into plaques. This is done in sequence to minimize the amount of crosslinking before molding. As with the blending, the molding time should be minimized in order to minimize the amount of initial crosslinking. A hydraulic compression press manufactured by Pasadena Hydraulics, Inc. was used to compress the samples. The samples were compressed according to the following profile: 170 °C/ 5 min/ 454 kg (1000 lbs); 170 °C/ 1 min/ 18144 kg (40000 lbs); 170 °C/ 1 min/ 454 kg (1000 lbs); 170 °C/ 2 min/ 18144 kg (40000 lbs); cool/ 5 min/ 18144 kg (40000 lbs).

Type I tensile bars and flexural bars are prepared as described above.

After the samples are compression molded and milled, some are post cured at 80 °C and 100 % relative humidity. The curing is accomplished using a Russells Technical Product humidity controlled oven (Model Rd-3-300-LN2). Samples are cured for 4 and 16 hours. Following curing, samples are dried in a vacuum oven at 50 °C to remove excess absorbed water from the high humidity.

Modulus of these samples is measured on a Rheometric Solids Analyzer (RSA) III. Testing is based on ASTM D 790-97 "Standard Test Methods for Flexural Properties of Unreinforced and Reinforced Plastics." The three-point bending geometry is used, with a support span length of 42.0 mm. The specimen geometry consisted of a length of 52.0 mm and a width of 12.7 mm. The thickness varied from 2.5 to 3.5 mm. A dynamic temperature ramp is performed on the specimens in static force tracking dynamic force mode. The temperature ramp was from -25°C to 75°C at 2°C per minute, with an initial soak time of five minutes at the initial temperature. Frequency is set at 1 radian per second, and the strain is set at 0.05%. Auto strain and auto tension adjustment options are utilized. Modulus values are reported at 23°C. If a data point is not recorded for 23°C, the data points directly before and after this temperature should be used to extrapolate for 23°C.

The tensile creep is measured at 23 °C using ASTM D638-00, Type I bars. A creep stress of 911 psi (or 6.28 MPa) is applied to the samples, and percent creep strain is measured incrementally with time. The stress corresponded to 70 % of the stress at break of the initial samples tested, the average did not include pure HDPE.

The moisture resistance of the composites is measured in the manner as described for the previous examples.

The trends in the extent of crosslinking are followed by measuring the fraction of the total composite mass that is insoluble in boiling xylenes. Polyethylene should dissolve readily in boiling xylenes, but highly crosslinked polyethylene swells without dissolving. The extraction set-up consisted of a 500 ml round bottom flask equipped with a water-cooled condenser. The flask is placed in a heated oil bath (T - 155 °C). The temperature is controlled with a heating coil, and monitored with a thermocouple placed in the oil bath. The temperature controller is equipped with over-heat protection. Samples were contained in stainless steal wire cloth (McMaster Can Type 304, 30 x 150 mesh, 0.009" x 0.007" diameter) boxes (∼1.4 cm square sides). Each box was connected to a wire that was strung through the condenser and enabled the boxes to be hung into refluxing xylenes.

Between 0.4 and 0.6 g of polymer is cut up in small pieces and placed in a stainless steel wire mesh box. The mass of the box and polymer are recorded. The top of the box is closed so that solid polymer and wood fibers would not escape. Each box is attached to a wire and hung into the round bottom flask containing approximately 200 mL of xylenes. The flask equipped with the condenser is placed in an oil bath and allowed to reflux for approximately 24 hours. After refluxing, the boxes are removed from the solution, allowed to cool, dried under vacuum at 50 °C, and then weighed.

The data in Table 3 indicates that the presence of the silane-containing polymer helps the compositions to better retain the modulus characteristics of the thermoplastic while improving creep properties. For instance Comparative Example 12 includes 50 wt. % wood fiber, 48 percent of the thermoplastic and about 2 wt. % of a catalyst masterbatch while in Example 8 the composition has 50 wt. % wood fiber, 48 wt. percent total polymer, but 12 wt. % of the polymer is the silane-containing polymer in place of the thermoplastic, and 2 wt. % catalyst masterbatch. When its creep properties are tested, comparative Example 12 has a time to break of only 8 hours, while that of Example 8 is over 1000 hours and yet Example 8 still has an acceptable modulus of about 2400 MPa.

**Table 3**

| | **Flexural Modulus (MPa)** | | | **Tensile Stress at Break (MPa)** | **Tensile Strain at Break (psi)** | **Creep Properties** | |
|---|---|---|---|---|---|---|---|
| **Example** | **No Cure** | **4 hr cure** | **16 hr cure** | **16 hr cure** | **16 hr cure** | **Time to break (hrs)** | **Break Strain (%)** |
| Comp. Ex. 10 | 1372 | 1338 | 1227 | 9.087 | 1.85 | - | - |
| Comp. Ex. 11 | 1289 | 1117 | 1427 | 8.329 | 1.66 | - | - |
| | 1296 | | 1165 | 11.86 | 2.66 | | |
| Comp. Ex. 12 | 1641 | 1469 | 1427 | 9.673 | 2.34 | - | - |
| | 1200 | | 1124 | 13.17 | 2.12 | | |
| Comp. Ex. 13 | 1317 | 1579 | 1379 | 9.956 | 2.24 | - | - |
| | 1227 | | 1310 | 12.07 | 3.41 | | |
| 4 | 2234 | | 309 | 13.86 | 1.35 | >1000 | - |
| 5 | 2779 | | 381 | - | - | - | - |
| 6 | 2455 | | 393 | 15.03 | 0.87 | >1000 | - |
| 7 | 4964 | | 556 | 16.48 | 0.99 | 248 | 0.98 |
| Comp. Ex 14 | 4337 | | 512 | 9.101 | 1.14 | 8 | 1.58 |
| 8 | 3365 | | 422 | 9.308 | 0.50 | - | - |
| 9 | 2599 | | 401 | 4.757 | 0.50 | - | - |
| 10 | 2744 | 370 | 382 | 9.294 | 0.88 | - | - |
| Comp. Ex 15 | 3427; 3530 | 2958 | 1972; 2641 | 6.440; 12.55 | 1.35; 0.98 | 116 | 1.75 |

**Table 4 - 50% (wt.) wood fiber**

| | Weight % Water Absorbed | | | | % thickness change | | | |
|---|---|---|---|---|---|---|---|---|
| Example | No Cure, 24 hour immersion | 16 hr cure, 24 hour immersion | No Cure, 1080 hour immersion | 16 hr cure, 1080 hour immersion | No Cure, 24 hour immersion | 16 hr cure, 24 hour immersion | No Cure, 1080 hour immersion | 16 hr cure, 1080 hour immersion |
| Comp. Ex. 10 | 2.23 | | 8.96 | | 1.35 | | 3.46 | |
| Comp. Ex. 11 | 2.13, 1.97 | 1.97 | 8.02, 6.99 | 5.75 | 2.10,2.31 | 1.75 | 5.29, 5.00 | 3.58 |
| Comp. Ex. 12 | 1.87, 1.75 | 2.50 | 7.00, 7.10 | 7.87 | 1.26, 2,43 | 1.94 | 4.26, 5.65 | 3.87 |
| Comp. Ex. 13 | 1.38, 1.67 | 1.85 | 5.55, 5.89 | 5.23 | 1.85, 1.39 | 1.49 | 4.33, 4.58 | 3.37 |
| 4 | 1.71 | 1.92 | 6.07 | 5.59 | 2.41 | 1.88 | 5.22 | 4.25 |
| 5 | 2.03 | 1.90 | 6.32 | 5.29 | 1.65 | 1.61 | 4.94 | 3.12 |
| 6 | 1.49 | 2.02 | 5.26 | 5.28 | 1.07 | 1.32 | 3.11 | 3.22 |
| Comparative 15 | 3.01, 1.24 | 3.92 | 13.41 | 13.70 | 3.99, 3.68 | 2.88 | 8.92, 9.45 | 6.28 |

**Table 4A-50%, 60%, 70% (wt) wood fiber**

| | Weight % Water Absorbed | | | | % thickness change | | | |
|---|---|---|---|---|---|---|---|---|
| Example | No Cure, 24 hour immersion | 16 hr cure, 24 hour immersion | No Cure, 1080 hour immersion | 16 hr cure, 1080 hour immersion | No Cure, 24 hour immersion | 16 hr cure, 24 hour immersion | No Cure, 1080 hour immersion | 16 hr cure, 1080 hour immersion |
| 8 | 2.27 | 2.86 | 9.71 | 8.69 | 2.09 | 2.15 | 7.36 | 4.49 |
| 9 | 5.02 | 5.77 | 22.12 | 18.52 | 2.86 | 2.94 | 9.48 | 5.88 |
| 10 | 1.49 | 5.44 | -- | -- | 1.46 | -- | 4.38 | -- |

The data in Table 4 further indicate that the presence of the silane-containing polymer reduces water absorption. For instance, Comparative Example 15 is a 50/50 mixture of wood fiber and thermoplastic. After being immersed in water for 1080 hours Comparative Example 16 shows a weight gain of over 13%. In Inventive Example 10 the composition has 50 wt. % wood fiber, 48 wt. % total polymer, but 16 wt. % of the polymer is the silane-containing polymer and the thermoplastic comprises 32 wt. % thermoplastic, and 2 wt. % catalyst masterbatch. After 1080 hours of immersion in water, the uncured sample of Example 10 gained only 5.26 wt. % water and the sample of example 10 that was cured (i.e. deliberately subjected to crosslinking conditions) for 16 hours gained only 5.28 wt. % after the 1080 hour immersion period.

Examples 4-10 and Comparative Examples 1-13 are subjected to extraction with xylene as described above to determine the extent of crosslinking in the composites. The results are reported in Table 5. As the data shows, the fraction of insoluble polymer increased with fraction of EVTMS copolymer in the composite. This result is indicative of a greater extent of crosslinking with samples containing greater fractions of EVTMS copolymer.

**Table 5**

| | **Percent Composite Remaining After 24 hour Extraction in Refluxing Xylenes** | | | | |
|---|---|---|---|---|---|
| **Example** | **Not molded** | **Not molded, cured 16 hours** | **Molded, Not Cured** | **Molded, 4 hour cure** | **Molded, 16 hour cure** |
| Comp. Ex. 10 | -- | -- | 82 | 86 | 88 |
| Comp. Ex. 11 | 65 | 83 | 80, 82 | 85 | 84,85 |
| Comp. Ex. 12 | 64 | 83 | 82,80 | -- | 87,85 |
| Comp. Ex. 13 | 37 | 65 | 72,68 | 75 | 80, 75 |
| 4 | 67 | 76 | 72 | -- | 75 |
| 5 | 64 | 70 | 66 | -- | 68 |
| 6 | 54 | 63 | 61 | -- | 64 |
| 8 | -- | -- | 71 | -- | 65 |
| 9 | -- | -- | 81 | -- | 90 |
| 10 | -- | -- | 73 | 70 | 71 |

### Comparative Example 16.

In this example 60 wt. percent pine wood flour (60 mesh) is combined with 37 wt. % a high density polyethylene having a reported melt index of 0.50, a density of 0.953 g/cm³ available from Equistar under the trade name Petrothane LB 0100-00 and 3 wt. % of Lubricant A that comprises a blend of carboxylic acid salts and mono- and di-amides with a reported a dropping point 67-77°C commercially available under the trade name Struktol-TWP104 were combined. The formulation was run on a 35 mm counter-rotating twin-screw extruder with vented barrel having a 0.95 x 3.8 cm (3/8 inch x 1.5 inch) die opening at 20 rpms and a melt temperature of about 166-168°C (330-335°F)

### Comparative Example 17

In this example, 60 wt. percent pine wood flour (60 mesh) is combined with 37 wt. % a high density polyethylene having a reported melt index of 0.50, a density of 0.953 g/cm³ available from Equistar under the trade name Petrothane LB 0100-00 and 3 wt. % of Lubricant B comprising a blend of modified fatty acid esters with a reported a dropping point 67-77°C and a density of 1.005 commercially available under the trade name Struktol-TWP113 were combined Comparative Example 16.

### Example 18

In this Example 60 wt. % pine wood flour (60 mesh) is combined with 35 wt. % of the high density polyethylene of Comparative Examples 14 and 15, 1 wt. % of Lubricant C which is a high bulk density, vegetable based additive containing zinc stearate available from Boerlocher as Zinc Stearate Kosher, Code 8565, 2 wt. % of Lubricant D comprising 98 wt. % N,N'-ethylenebisstearamide and 2 wt % stearic acid, commercially available from IMS Company under the trade name Acrawax C, and 2 wt. % of an ethylene vinyl trimethoxysilane (EVTMS) copolymer with a melt index of 1.5 g/10 min, a density of 0.922 g/cc, and 1.5 % vinyl trimethoxysilane by weight. The formulation was run on a 35 mm counter-rotating twin-screw extruder with vented barrel having a 0.95 x 3.8 cm (3/8 inch x 1.5 inch) die opening at 20 rpms and a melt temperature of about 166-168°C (330-335°F)

### Example 19

The composition of Example 18 was substantially reproduced except that the processing aids were replaced with 3 wt. % of Lubricant E which is a zinc-stearate based composition available as Lubrazinc™ W from Crompton Corp. Analysis of this sample shows that the concentration of silicon is 373 ppm. Crosslinking in this composition is examined by measuring the silicon content in the portions of the composition after xylene extraction performed as described above. The concentration of silicon in the xylene extractable is 491 ppm while the silicon concentration in the portion that is insoluble in xylene is 478 ppm.

### Example 20

The composition of Example 18 was substantially reproduced except that Lubricant D is replaced with Lubricant C such that the composition includes 60 wt. % wood fiber, 35 wt. % HDPE, 3 wt. % of Lubricant C and 2 wt. % of the ethylene vinyl trimethoxysilane (EVTMS) copolymer.

### Example 21

The composition of Example 18 was substantially reproduced except that Lubricants C and D were replaced with Lubricant A such that the composition includes 60 wt. % wood fiber, 35 wt. % HDPE, 3 wt. % of Lubricant A and 2 wt. % of the ethylene vinyl trimethoxysilane (EVTMS) copolymer.

### Example 22

The composition of Example 18 was substantially reproduced except that Lubricants C and D were replaced with Lubricant B such that the composition includes 60 wt. % wood fiber, 35 wt. % HDPE, 3 wt. % of Lubricant B and 2 wt. % of the ethylene vinyl trimethoxysilane (EVTMS) copolymer.

### Example 23

The composition of Example 18 was substantially reproduced except that Lubricants C and D were replaced with Lubricant D such that the composition includes 60 wt. % wood fiber, 35 wt. % HDPE, 3 wt. % of Lubricant D and 2 wt. % of the ethylene vinyl trimethoxysilane (EVTMS) copolymer. Analysis of this sampled shows that the concentration of silicon is 412 ppm. Crosslinking in this composition is examined by measuring the silicon content in the portions of the composition after xylene extraction performed as described above. The concentration of silicon in the xylene extractable is 678 ppm while the silicon concentration in the portion that is insoluble in xylene is 350 ppm.

### Example 24

The composition of Example 18 was substantially reproduced except that Lubricants C and D were replaced with Lubricant F (a proprietary non-metallic stearate lubricant available from Monson Co. under the trade name Glycolube) such that the composition includes 60 wt. % wood fiber, 35 wt. % HDPE, 3 wt. % of Lubricant F and 2 wt. % of the ethylene vinyl trimethoxysilane (EVTMS) copolymer.

### Example 25

The composition of Example 18 was substantially reproduced except that Lubricants C and D were replaced with Lubricant G (a blend of metallic stearates and non-metallic lubricants such as ester-based compounds and waxes, available from Ferro Polymer Additives as SXT-2000) such that the composition includes 60 wt. % wood fiber, 35 wt. % HDPE, 3 wt. % of Lubricant G and 2 wt. % of the ethylene vinyl trimethoxysilane (EVTMS) copolymer.

### Example 26

The composition of Example 18 was substantially reproduced except that Lubricants C and D were replaced with Lubricant H (a non-metallic-stearate lubricant available from Ferro Polymer Additives as SXT-3100) such that the composition includes 60 wt. % wood fiber, 35 wt. % HDPE, 3 wt. % of Lubricant H and 2 wt. % of the ethylene vinyl trimethoxysilane (EVTMS) copolymer.

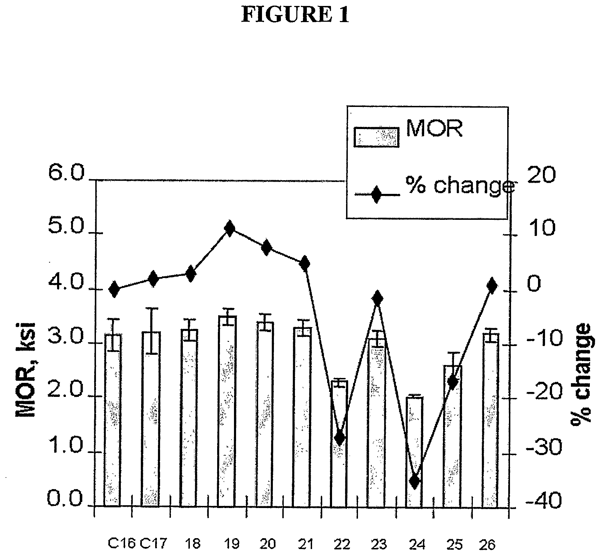

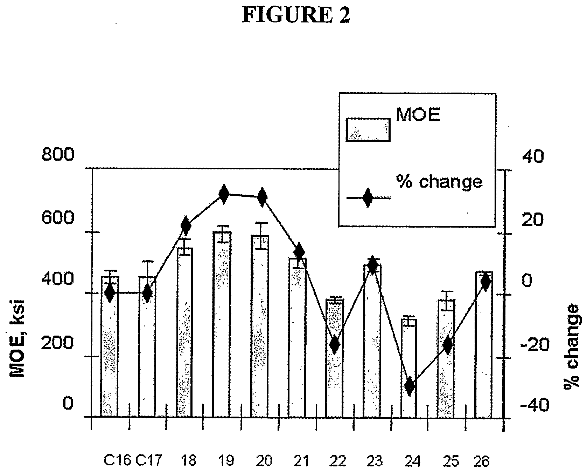

For Comparative Examples 16-17 and Examples 18-26, the flexural strength or modulus of rupture (MOR), and the modulus of elasticity (MOE) were measured according to ASTM D790-97, "Flexural Properties of Unreinforced and Reinforced Plastics and Electrical Insulating Materials." The results are recorded in Table 6. The specimens had a width of 2.54 cm (1.0 in.) and a length of 15.2 cm (6 in.). The thickness of the specimen was targeted at 0.635 cm (0.25 in.), and the support span was set at 10.2 cm (4 in.), yielding a 16:1 L/D ratio, as described by the ASTM testing protocol. The testing was conducted in a standard room temperature of 23°C and 50% humidity. Figure 1 shows the MOR the relative MOR for these samples. Figure 2 shows the MOE the relative MOE for these samples.

**Table 6**

| Example | %WF | % HDPE | % EVTMS | % Lubricant | Rel. MOE | Rel. MOR | Rel. Rate of |
|---|---|---|---|---|---|---|---|
| Comp. Ex. 16 | 60 | 37 | 0 | 3 (lubricant A) | 1 | -1 | 1 |
| Comp. Ex. 17 | 60 | 37 | 0 | 3 (lubricant B) | 1 | -- | -- |
| Ex. 18 | 60 | 35 | 2 | 1 (lubricant C); 2 (lubricant D) | -- | -- | -- |
| Ex. 19 | 60 | 35 | 2 | 3 (lubricant E) | 1.32 | 1.11 | 0.96 |
| Ex. 20 | 60 | 35 | 2 | 3 (lubricant C) | 1.31 | 1.08 | 0.97 |
| Ex. 21 | 60 | 35 | 2 | 3 (lubricant A) | 1.13 | 1.05 | 1.40 |
| Ex. 22 | 60 | 35 | 2 | 3 (lubricant B) | 0.84 | 0.73 | 1.54 |
| Ex. 23 | 60 | 35 | 2 | 3 (lubricant D) | -- | -- | -- |
| Ex. 24 | 60 | 35 | 2 | 3 (lubricant F) | -- | -- | -- |
| Ex. 25 | 60 | 35 | 2 | 3 (lubricant G) | -- | -- | -- |
| Ex. 26 | 60 | 35 | 2 | 3 (lubricant H) | -- | -- | -- |

While the invention has been described with respect to a limited number of embodiments, the specific features of one embodiment should not be attributed to other embodiments of the invention. No single embodiment is representative of all aspects of the invention. Variations and modifications from the described embodiments exist. The embodiments described herein may have one or more of the features or advantages, but no single embodiment described herein should be construed to possess all the advantages or features mentioned. Moreover, where embodiments of the invention are described as comprising various components or steps, it should be understood that these embodiments may also consist essentially of or consist of the enumerated components or steps. In addition, while the compositions have been described herein as comprising various amounts of each component, the amounts of each component should be selected to provide a composition having useful physical properties, especially flexural modulus which should be at least about 2000-2500 megapascals. Preferred compositions have a flexural modulus of about 5000 megapascals or about 10000 megapascals. Some preferred compositions may also provide improved output when silane composition is included.

## Claims

1. A composition, comprising a mixture of a) a cellulosic material; b) a silane-containing polymer; and c) a thermoplastic, wherein the thermoplastic is either selected from the group consisting of one or more polystyrenes, polyvinylchlorides, polyesters, and combinations thereof or comprises a thermoplastic polyolefin, wherein the thermoplastic polyolefin comprises an interpolymer of ethylene with at least one comonomer selected from the group consisting of a C₄-C₂₀ linear, branched or cyclic diene, vinyl acetate, and a compound represented by the formula H₂C=CHR wherein R is a C₁-C₂₀ linear, branched or cyclic alkyl group or a C₆-C₂₀ aryl group, a copolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group, a homopolymer of ethylene or a homopolymer of propylene wherein the silane-containing polymer is prepared by copolymerizing an ethylenically unsaturated silane and an alpha-olefin wherein the ethylenically unsaturated silane compound corresponds to the formula:
RSiR'ₙY₃₋ₙ
wherein R is an ethylenically unsaturated hydrocarbyl or hydrocarbyloxy group; each R' independently is an aliphatic saturated hydrocarbyl group, each Y independently is a hydrolyzable organic group, and n ranges from 0 to 2.

2. The composition according to claim 1, wherein the cellulosic material is selected from the group consisting of wood fibers.

3. The composition according to claim 1, wherein the composition comprises 40 to 98 percent by weight cellulosic material, wherein the percent by weight is based on the combined weight of components (a), (b), and (c).

4. The composition according to claim 1, wherein the silane-containing polymer includes 0.1 to 10 wt % groups derived from an ethylenically unsaturated silane.

5. The composition according to claim 1, wherein the composition is crosslinkable or at least partially crosslinked.

6. The composition according to claim 1, wherein the composition comprises from 0.5 to 60 percent by weight silane-containing polymer, wherein the percent by weight is based on the weight of components (a), (b), and (c).

7. The composition according to claim 1, wherein the thermoplastic is selected from the group consisting of one or more polystyrenes, polyvinylchlorides, polyesters, and combinations thereof.

8. The composition according to claim 1, wherein the thermoplastic comprises a thermoplastic polyolefin which comprises an interpolymer of ethylene with at least one comonomer selected from the group consisting of a C₄-C₂₀ linear, branched or cyclic diene, vinyl acetate, and a compound represented by the formula H₂C=CHR wherein R is a C₁-C₂₀ linear, branched or cyclic alkyl group or a C₆-C₂₀ aryl group.

9. The composition according to claim 1, wherein the thermoplastic comprises a thermoplastic polyolefin which comprises a copolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group.

10. The composition according to claim 1, wherein the composition comprises from greater than 0 to 60 percent by weight thermoplastic, wherein the percent by weight is based on the weight of components (a), (b), and (c).

11. The composition according to claim 10, wherein the cellulosic material comprises less than 50 percent by weight of the composition.

12. The composition according to claim 1, further comprising a crosslinking catalyst.

13. The composition according to claim 12, wherein the composition comprises from greater than 0 to 1 percent by weight cross-linking catalyst.

14. The composition according to claim 12, wherein the catalyst comprises an organotitanate or an organozirconate.

15. The composition according to claim 12, wherein the catalyst is selected from the group consisting of dibutyltin dioctoate, dibutyltin, diacetate, dibutyltin dilaurate, tin naphthonate, tin octoate, lead octoate, iron octoate, zinc octoate, tetrabutyl orthotitanate, tetraisopropyl orthotitanate, ethylacetoacetate aluminum diisopropylate, and aluminum tris(ethylacetate).

16. The composition according to claim 1 wherein the thermoplastic is a homopolymer of ethylene or a homopolymer of propylene.

17. The composition of claim 1 further comprising d) a lubricant comprising a metallic stearate.

18. The composition according to claim 17, wherein the metallic stearate lubricant comprises 0.01 to 10 wt% zinc stearate or aluminium stearate by weight of the total composition.

## Patentansprüche

1. Eine Zusammensetzung, beinhaltend eine Mischung aus a) einem zellulosehaltigen Material, b) einem silanhaltigen Polymer und c) einem Thermoplast, wobei der Thermoplast entweder aus der Gruppe ausgewählt ist, die aus einem oder mehreren Polystyrolen, Polyvinylchloriden, Polyestern und Kombinationen davon besteht, oder ein thermoplastisches Polyolefin beinhaltet, wobei das thermoplastische Polyolefin Folgendes beinhaltet: ein Mischpolymer aus Ethylen mit mindestens einem Comonomer, ausgewählt aus der Gruppe, bestehend aus einem linearen, verzweigten oder cyclischen C₄-C₂₀-Dien, Vinylacetat und einer durch die Formel H₂C=CHR dargestellten Verbindung, wobei R eine lineare, verzweigte oder cyclische C₁-C₂₀-Alkylgruppe oder eine C₆-C₂₀-Arylgruppe ist, ein Copolymer aus Propylen mit mindestens einem Comonomer, ausgewählt aus der Gruppe, bestehend aus Ethylen, einem linearen, verzweigten oder cyclischen C₄-C₂₀-Dien und einer durch die Formel H₂C=CHR dargestellten Verbindung, wobei R eine lineare, verzweigte oder cyclische C₁-C₂₀-Alkylgruppe oder eine C₆-C₂₀-Arylgruppe ist, ein Homopolymer aus Ethylen oder ein Homopolymer aus Propylen, wobei das silanhaltige Polymer durch Copolymerisieren eines ethylenisch ungesättigten Silans und eines Alpha-Olefins hergestellt wird, wobei die ethylenisch ungesättigte Silanverbindung der folgenden Formel entspricht:
RSiR'ₙY₃₋ₙ
wobei R eine ethylenisch ungesättigte Hydrocarbyl- oder Hydrocarbyloxygruppe ist, jedes R' unabhängig eine aliphatische gesättigte Hydrocarbylgruppe ist, jedes Y unabhängig eine hydrolysierbare organische Gruppe ist und n in dem Bereich von 0 bis 2 liegt.

2. Zusammensetzung gemäß Anspruch 1, wobei das zellulosehaltige Material aus der Gruppe ausgewählt ist, die aus Holzfasern besteht.

3. Zusammensetzung gemäß Anspruch 1, wobei die Zusammensetzung 40 bis 98 Gewichtsprozent zellulosehaltiges Material beinhaltet, wobei das Gewichtsprozent auf das kombinierte Gewicht der Komponenten (a), (b) und (c) bezogen ist.

4. Zusammensetzung gemäß Anspruch 1, wobei das silanhaltige Polymer 0,1 bis 10 Gew.-% Gruppen umfasst, die von einem ethylenisch ungesättigten Silan abgeleitet sind.

5. Zusammensetzung gemäß Anspruch 1, wobei die Zusammensetzung vernetzbar oder mindestens teilweise vernetzt ist.

6. Zusammensetzung gemäß Anspruch 1, wobei die Zusammensetzung 0,5 bis 60 Gewichtsprozent silanhaltiges Polymer beinhaltet, wobei das Gewichtsprozent auf das Gewicht der Komponenten (a), (b) und (c) bezogen ist.

7. Zusammensetzung gemäß Anspruch 1, wobei der Thermoplast aus der Gruppe ausgewählt ist, die aus einem oder mehreren Polystyrolen, Polyvinylchloriden, Polyestern und Kombinationen davon besteht.

8. Zusammensetzung gemäß Anspruch 1, wobei der Thermoplast ein thermoplastisches Polyolefin beinhaltet, das ein Mischpolymer aus Ethylen mit mindestens einem Comonomer, ausgewählt aus der Gruppe, bestehend aus einem linearen, verzweigten oder cyclischen C₄-C₂₀-Dien, Vinylacetat und einer durch die Formel H₂C=CHR dargestellten Verbindung, beinhaltet, wobei R eine lineare, verzweigte oder cyclische C₁-C₂₀-Alkylgruppe oder eine C₆-C₂₀-Arylgruppe ist.

9. Zusammensetzung gemäß Anspruch 1, wobei der Thermoplast ein thermoplastisches Polyolefin beinhaltet, das ein Copolymer aus Propylen mit mindestens einem Comonomer, ausgewählt aus der Gruppe, bestehend aus Ethylen, einem linearen, verzweigten oder cyclischen C₄-C₂₀-Dien und einer durch die Formel H₂C=CHR dargestellten Verbindung, beinhaltet, wobei R eine lineare, verzweigte oder cyclische C₁-C₂₀-Alkylgruppe oder eine C₆-C₂₀-Arylgruppe ist.

10. Zusammensetzung gemäß Anspruch 1, wobei die Zusammensetzung von mehr als 0 bis 60 Gewichtsprozent Thermoplast beinhaltet, wobei das Gewichtsprozent auf das Gewicht der Komponenten (a), (b) und (c) bezogen ist.

11. Zusammensetzung gemäß Anspruch 10, wobei das zellulosehaltige Material weniger als 50 Gewichtsprozent der Zusammensetzung ausmacht.

12. Zusammensetzung gemäß Anspruch 1, die ferner einen Vernetzungskatalysator beinhaltet.

13. Zusammensetzung gemäß Anspruch 12, wobei die Zusammensetzung von mehr als 0 bis 1 Gewichtsprozent Vernetzungskatalysator beinhaltet.

14. Zusammensetzung gemäß Anspruch 12, wobei der Katalysator ein Organotitanat oder ein Organozirconat beinhaltet.

15. Zusammensetzung gemäß Anspruch 12, wobei der Katalysator aus der Gruppe ausgewählt ist, die aus Folgendem besteht: Dibutylzinndioctoat, Dibutylzinn, Diacetat, Dibutylzinndilaurat, Zinnnaphthonat, Zinnoctoat, Bleioctoat, Eisenoctoat, Zinkoctoat, Tetrabutylorthotitanat, Tetraisopropylorthotitanat, Ethylacetoacetat-aluminiumdiisopropylat und Aluminium-tris(ethylacetat).

16. Zusammensetzung gemäß Anspruch 1, wobei der Thermoplast ein Homopolymer aus Ethylen oder ein Homopolymer aus Propylen ist.

17. Zusammensetzung gemäß Anspruch 1, die ferner d) ein ein metallisches Stearat beinhaltendes Schmiermittel beinhaltet.

18. Zusammensetzung gemäß Anspruch 17, wobei das Schmiermittel mit metallischem Stearat 0,01 bis 10 Gew.-% Zinkstearat oder Aluminiumstearat nach Gewicht der Gesamtzusammensetzung beinhaltet.

## Revendications

1. Une composition, comprenant un mélange a) d'une matière cellulosique ; b) d'un polymère contenant du silane ; et c) d'un thermoplastique, dans laquelle le thermoplastique soit est sélectionné dans le groupe constitué d'un ou de plusieurs polystyrènes, polyvinylchlorures, polyesters, et de combinaisons de ceux-ci, soit comprend une polyoléfine thermoplastique, dans laquelle la polyoléfine thermoplastique comprend un interpolymère d'éthylène avec au moins un comonomère sélectionné dans le groupe constitué d'un diène linéaire, ramifié ou cyclique en C₄ à C₂₀, d'un acétate de vinyle, et d'un composé représenté par la formule H₂C=CHR dans laquelle R est un groupe alkyle linéaire, ramifié ou cyclique en C₁ à C₂₀ ou un groupe aryle en C₆ à C₂₀, un copolymère de propylène avec au moins un comonomère sélectionné dans le groupe constitué d'éthylène, d'un diène linéaire, ramifié ou cyclique en C₄ à C₂₀, et d'un composé représenté par la formule H₂C=CHR dans laquelle R est un groupe alkyle linéaire, ramifié ou cyclique en C₁ à C₂₀ ou un groupe aryle en C₆ à C₂₀, un homopolymère d'éthylène ou un homopolymère de propylène dans laquelle le polymère contenant du silane est préparé en copolymérisant un silane éthyléniquement insaturé et une alpha-oléfine dans laquelle le composé silane éthyléniquement insaturé correspond à la formule :
RSiR'ₙY₃₋ₙ
dans laquelle R est un groupe hydrocarbyle ou hydrocarbyloxy éthyléniquement insaturé ; chaque R' est indépendamment un groupe hydrocarbyle saturé aliphatique, chaque Y est indépendamment un groupe organique hydrolysable, et n est compris dans la gamme allant de 0 à 2.

2. La composition selon la revendication 1, dans laquelle la matière cellulosique est sélectionnée dans le groupe constitué de fibres de bois.

3. La composition selon la revendication 1, la composition comprenant de 40 à 98 pour cent en poids de matière cellulosique, dans laquelle le pourcentage en poids est rapporté au poids combiné des composants (a), (b), et (c).

4. La composition selon la revendication 1, dans laquelle le polymère contenant du silane inclut des groupes de 0,1 à 10 % en poids dérivés d'un silane éthyléniquement insaturé.

5. La composition selon la revendication 1, la composition étant réticulable ou au moins en partie réticulée.

6. La composition selon la revendication 1, la composition comprenant de 0,5 à 60 pour cent en poids de polymère contenant du silane, dans laquelle le pourcentage en poids est rapporté au poids des composants (a), (b), et (c).

7. La composition selon la revendication 1, dans laquelle le thermoplastique est sélectionné dans le groupe constitué d'un ou de plusieurs polystyrènes, polyvinylchlorures, polyesters, et de combinaisons de ceux-ci.

8. La composition selon la revendication 1, dans laquelle le thermoplastique comprend une polyoléfine thermoplastique qui comprend un interpolymère d'éthylène avec au moins un comonomère sélectionné dans le groupe constitué d'un diène linéaire, ramifié ou cyclique en C₄ à C₂₀, d'un acétate de vinyle, et d'un composé représenté par la formule H₂C=CHR dans laquelle R est un groupe alkyle linéaire, ramifié ou cyclique en C₁ à C₂₀ ou un groupe aryle en C₆ à C₂₀.

9. La composition selon la revendication 1, dans laquelle le thermoplastique comprend une polyoléfine thermoplastique qui comprend un copolymère de propylène avec au moins un comonomère sélectionné dans le groupe constitué d'éthylène, d'un diène linéaire, ramifié ou cyclique en C₄ à C₂₀, et d'un composé représenté par la formule H₂C=CHR dans laquelle R est un groupe alkyle linéaire, ramifié ou cyclique en C₁ à C₂₀ ou un groupe aryle en C₆ à C₂₀.

10. La composition selon la revendication 1, la composition comprenant de plus de 0 à 60 pour cent en poids de thermoplastique, dans laquelle le pourcentage en poids est rapporté au poids des composants (a), (b), et (c).

11. La composition selon la revendication 10, dans laquelle la matière cellulosique comprend moins de 50 pour cent en poids de la composition.

12. La composition selon la revendication 1, comprenant en outre un catalyseur de réticulation.

13. La composition selon la revendication 12, la composition comprenant de plus de 0 à 1 pour cent en poids de catalyseur de réticulation.

14. La composition selon la revendication 12, dans laquelle le catalyseur comprend un organotitanate ou un organozirconate.

15. La composition selon la revendication 12, dans laquelle le catalyseur est sélectionné dans le groupe constitué de dioctoate de dibutylétain, dibutylétain, diacétate, dilaurate de dibutylétain, naphténate d'étain, octoate d'étain, octoate de plomb, octoate de fer, octoate de zinc, orthotitanate de tétrabutyle, orthotitanate de tétraisopropyle, diisopropylate d'aluminium éthylacétoacétate aluminium, et tris(éthylacétate) d'aluminium.

16. La composition selon la revendication 1 dans laquelle le thermoplastique est un homopolymère d'éthylène ou un homopolymère de propylène.

17. La composition de la revendication 1 comprenant en outre d) un lubrifiant comprenant un stéarate métallique.

18. La composition selon la revendication 17, dans laquelle le lubrifiant de stéarate métallique comprend de 0,01 à 10 % en poids de stéarate de zinc ou de stéarate d'aluminium en poids de la composition totale.
